Europäisches Patentamt

European Patent Office

Office européen des brevets

(11) Publication number: **0 148 559**
**B1**

(12) **EUROPEAN PATENT SPECIFICATION**

(45) Date of publication of patent specification: **08.07.87**

(51) Int. Cl.⁴: **B 62 D 53/06**

(21) Application number: **84306800.8**

(22) Date of filing: **05.10.84**

(54) Load-carrying road vehicle.

(30) Priority: **13.10.83 GB 8327441**

(43) Date of publication of application:
**17.07.85 Bulletin 85/29**

(45) Publication of the grant of the patent:
**08.07.87 Bulletin 87/28**

(84) Designated Contracting States:
**GB**

(56) References cited:
**EP-A-0 063 008**
**GB-A-2 088 789**
**GB-A-2 108 443**
**US-A-3 149 739**
**US-A-3 876 086**

(73) Proprietor: **CRAVEN TASKER (SHEFFIELD) LIMITED**
**Staniforth Road**
**Darnall Sheffield S9 4LL (GB)**

(72) Inventor: **Mellors, Norman**
**469 Whirlowdale Road**
**Sheffield S11 9NH (GB)**

(74) Representative: **Ford, Michael Frederick et al**
**MEWBURN ELLIS & CO. 2/3 Cursitor Street**
**London EC4A 1BQ (GB)**

Courier Press, Leamington Spa, England.

## Description

The invention relates to load-carrying road vehicles of the semi-trailer van type.

Van type semi-trailer load-carrying road vehicles are of two main kinds, that is to say a first kind having a very deep and strong underframe structure on which a body is fixed, and a second kind which is devoid of an underframe, the necessary strength being provided by the box-like vehicle body. If this second kind of vehicle is provided with wheels of conventional size there is a considerable ground clearance beneath the box-like body. Since the overall height of a road vehicle is necessarily limited, this considerable ground clearance represents a considerable loss of carrying capacity within the overall height. Consequently, various ways have previously been tried to remedy the situation. For example, a box-like vehicle body construction having a stepped floor has been used and this has necessitated the use of relatively small diameter road wheels the tyres of which very quickly wear out. A further disadvantage of this construction is that with such a stepped floor construction it is not as easy to load the vehicle body as with a construction having a flat uninterrupted floor. In another construction, the considerable ground clearance beneath a vehicle body has been used for the fitment of lockers with side opening doors, but the loading and unloading of such lockers through said side opening doors has not always been very convenient.

In a previous approach (see EP—A—0 063 008) to solve the problem of how to increase the load-carrying capacity of a van type semi-trailer road vehicle without resorting to a stepped floor construction or the fitment of lockers with side opening doors it has been proposed to provide such a vehicle, of the kind devoid of an underframe, with means whereby at least one auxiliary load-carrying body or pod, extending across the full width of the vehicle, and possibly two or more such load-carrying bodies or pods arranged in side by side relation, can be releasably secured beneath the main box-like body of the vehicle. However, in certain circumstances, because of the fact that the width of the or each auxiliary load-carrying body or pod has been substantially the same as the width of the main body of the vehicle, it can be difficult to properly align the load-carrying body or pod with means for securing it beneath the main body. The great width of the or each auxiliary load-carrying body or pod has made it difficult for such a structure to be handled solely by the use of a conventional fork lift truck and at least at one side of the or each load-carrying body or pod it has been necessary to provide jacking or hoisting means for elevating that side of the body or pod into position beneath the main box-like body of the vehicle.

The invention as claimed in claim 1 is intended to provide a remedy. It solves the problem of how to increase the load-carrying capacity of a van type semi-trailer road vehicle in a most convenient manner.

The advantages offered by the invention are mainly that the load-carrying capacity of the vehicle is increased and the stability of the vehicle is improved, and that the use of a pair of auxiliary bodies or pods in the manner described provides a useful safety feature against pedestrians and cyclists falling under, and passenger cars under-running, the main box-like vehicle body, whilst the fact that the auxiliary bodies or pods are provided in oppositely disposed pairs and are releasably secured beneath the main box-like body in the manner described ensures that they can be attached to or detached from the main body with great facility.

In order that the invention may be fully understood and readily carried into effect, the same will now be described, by way of example only, with reference to the accompanying drawings, of which:—

Figure 1 is a perspective view of a van type semi-trailer load-carrying road vehicle provided with a pair of auxiliary load-carrying bodies or pods embodying the invention.

Figure 2 is a semi-diagrammatic transverse section through the vehicle which illustrates the construction of the auxiliary load-carrying bodies or pods and how they are connected beneath the semi-trailer body,

Figure 3 is a view which illustrates, in transverse section through the vehicle, the manner in which an auxiliary load-carrying body or pod is brought into position for connection beneath the semi-trailer body,

Figure 4 is a view illustrating a possible modification, that is to say the fitment of guide channels beneath the semi-trailer body as an aid in the positioning of auxiliary load-carrying bodies or pods for connection beneath said semi-trailer body, and

Figure 5 is a sectional view on the line 5—5 in Figure 4,

Figure 6 is a perspective view illustrating a possible modification of the auxiliary bodies or pods,

Figure 7 is a scrap sectional view on the line 7—7 in Figure 6,

Figure 8 is a partly cut-away perspective view of a rear corner of the body or pod of Figure 6, and

Figure 9 is a perspective view in the direction of arrow 9 in Figure 6, and

Figure 10 is a perspective view illustrating a further possible modification.

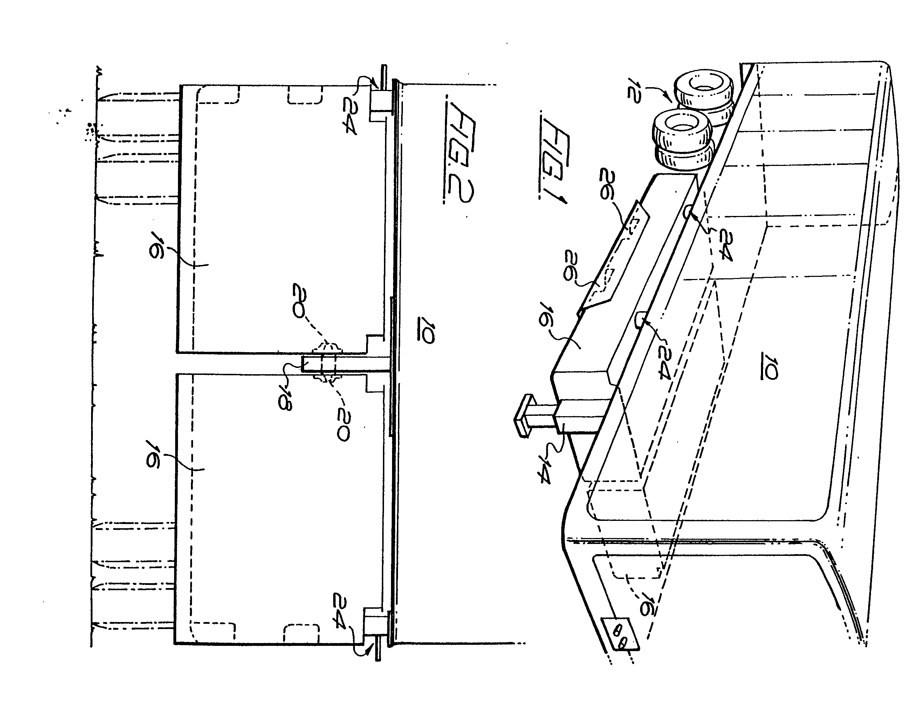

Referring now to Figure 1 of the drawings, the van type semi-trailer load-carrying road vehicle there illustrated is devoid of an underframe, the necessary strength being provided by the box-like vehicle body 10 to which the wheel set generally indicated 12 at the rear of the vehicle is directly connected. Also connected directly to the box-like body 10, at the front of the vehicle, are the necessary parts (not shown) of the so-called fifth wheel connection by means of which a tractor unit can be coupled to the vehicle and retractable ground engaging landing legs 14, only one of which is visible in Figure 1, by means of which the front end of the vehicle is supported when not connected to a tractor unit.

The road wheels located near the rear of the vehicle are of conventional size. Consequently, the box-like vehicle body 10 is carried at a substantial height from the road surface, the ground clearance beneath the underside of the body at the front end of the vehicle and immediately in front of and behind the road wheels being in the region of 120 c.m. However, it will be seen that the vehicle illustrated in Figure 1 is provided with a pair of auxiliary load-carrying bodies or pods 16, 16 these having been releasably secured beneath the main box-like body 10. The ground clearance beneath the auxiliary load-carrying bodies or pods is somewhere in the region of 30 c.m. to 40 c.m. The length of each auxiliary body or pod depends of course on the available space ahead of the road wheel set 12 but may for example be in the region of 5 metres.

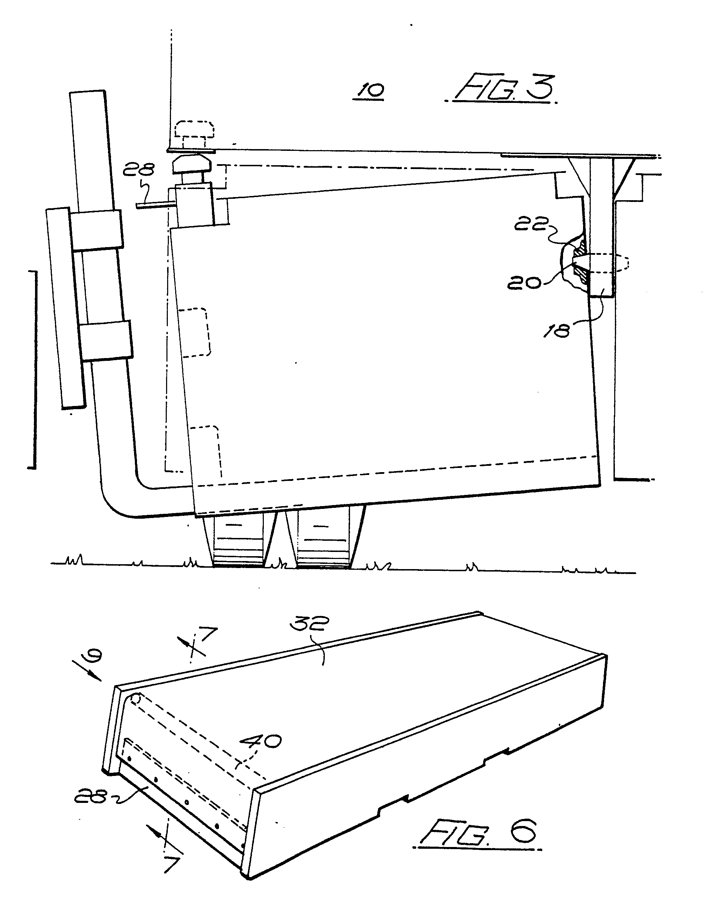

Referring now to Figure 2 of the drawings, it will be seen that the width of each of the auxiliary load-carrying bodies or pods, 16, 16 is a little less than half the width of the main body of the vehicle, the pair of bodies or pods being located on opposite sides of a longitudinally extending load-carrying element 18 depending from the underside of the main box-like body midway of its width. Slideable engagement means for supporting part of the weight of the auxiliary bodies or pods are constituted by tapered plug and socket connectors, the tapered plugs 20 being permanently secured to the plate element 18, as shown, and the tapered sockets 22 being formed in the walls of the bodies or pods. Locking means accessible beneath the side edges of the main box-like body of the vehicle, for securing the auxiliary bodies or pods against sliding movement in the slideable engagement means when properly located beneath said main body, are constituted by so-called "Twistlock" fastenings generally indicated 24. These of course support part of the weight of the auxiliary bodies or pods in addition to performing the function of securing said bodies or pods against sliding movement in the slideable engagement means. The "Twistlock" fastenings are carried by reinforced upper portions of longitudinal side walls of the auxiliary bodies or pods. Apertures (not shown) are formed beneath the longitudinal side edges of the main body to receive the non-circular head portions of the "Twistlock" fastenings.

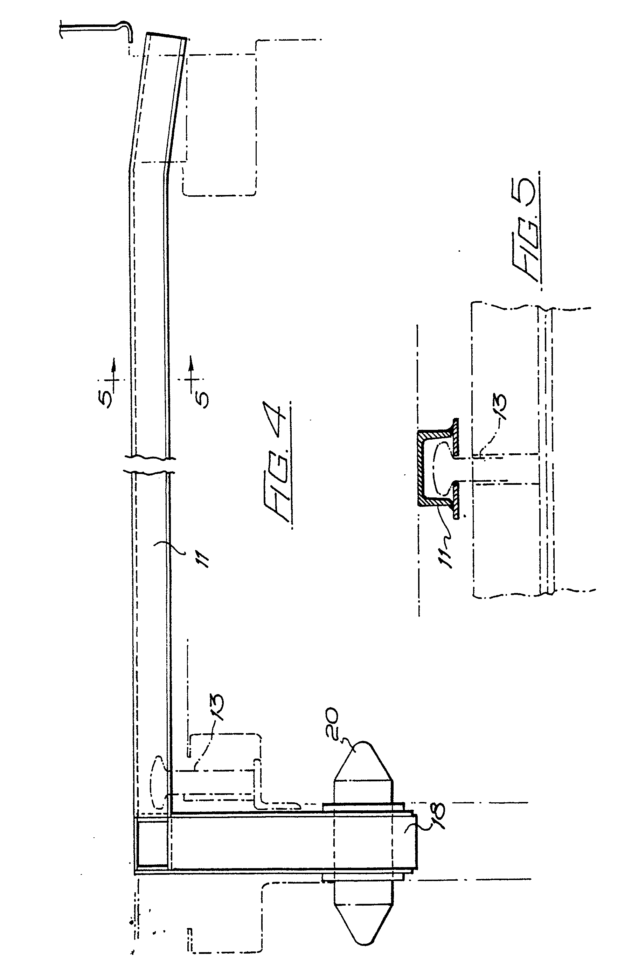

As shown in Figures 2 and 3, the floor of each auxiliary body or pod is of reinforced construction so that the weight of the fully loaded body or pod can be supported solely by the forwardly extending load-carrying tines of a conventional fork lift truck. For this reason also, each auxiliary body or pod is provided with a pair of transverse slots 26 constituting so-called fork pockets extending inwardly across its underside for the reception of such load carrying tines, the slots being spaced apart, midway along the length of the body or pod, at the conventional spacing of fork lift truck tines.

The arrangement is such that when it is desired to connect one of the auxiliary bodies or pods beneath the main body of the vehicle, this can be effected by using a conventional fork lift truck. As indicated in Figure 3, when the auxiliary body or pod has been raised by the load-carrying tines of the fork lift truck, it can be moved into position beneath the main body of the vehicle so that the tapered sockets 22 of the body or pod become engaged with the tapered plugs 20 which project from the plate element 18. (It will be understood that the fork lift truck driver may find it best to lift the auxiliary body or pod to a height somewhat lower than the height of the tapered plugs so that he can "sight" the positioning of the tapered sockets vertically in line with them before bringing the body or pod substantially to the final height required and then moving forwardly to engage the plugs and sockets). When the body or pod, in the slightly tilted back condition shown in full lines in Figure 3, has been engaged with the tapered plugs projecting from the depending plate element, it can be brought to the horizontal condition so that the "Twistlock" fastenings can be engaged and tightened, that is to say so that the non-circular heads of the "Twistlock" fastenings can be passed through the apertures (not shown) beneath the longitudinal side edge of the main body and then turned by means if the locking levers 28 forming part of said fastenings. When the fork lift truck has subsequently been backed away, the vehicle can be driven away with the auxiliary body or pod safely slung beneath the main box-like body. (Although not illustrated in the drawings, safety catches are associated with the "Twistlock" fastenings to guard against their inadvertent release).

The use of the pair of auxiliary bodies or pods in the manner described represents a significant extra carrying capacity of the vehicle without any increase of its overall dimensions. For example, typically, each auxiliary body or pod may have in the region of 5% of the volume of the box-like body beneath which it is carried. However, various other advantages follow from the use of such auxiliary bodies or pods. For example, such pods are useful if part of the total load which is carried is to be left at a particular destination and the main part of the load is to be taken elsewhere. It may sometimes be advantageous for the part of the load carried by one or both of the auxiliary bodies or pods to be carried separately from the remainder of the load, for example if the main body is to carry foodstuffs and one or both of the auxiliary bodies or pods is to carry engineering products such as loose castings. It may be useful if a particular pair of auxiliary bodies or pods can be transported on an outward journey to be replaced by other auxiliary bodies or pods for the return journey. A further significant advantage is that the use of a pair of auxiliary bodies or pods in the manner described provides a useful safety feature against pedestrians and cyclists falling under, and passenger cars underrunning, the main box-like vehicle body. Furthermore, the stability of the vehicle is significantly improved by the fact that its centre of gravity is lowered, particularly if the pair of auxiliary bodies or pods carry relatively heavy articles such as engineering parts and the main body carries a high volume, low weight load such as some foodstuffs.

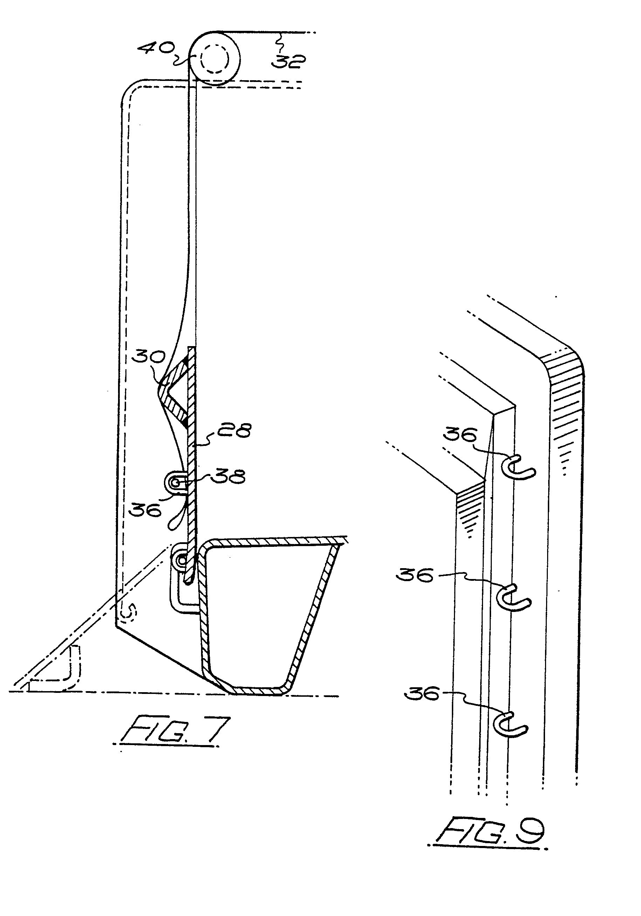

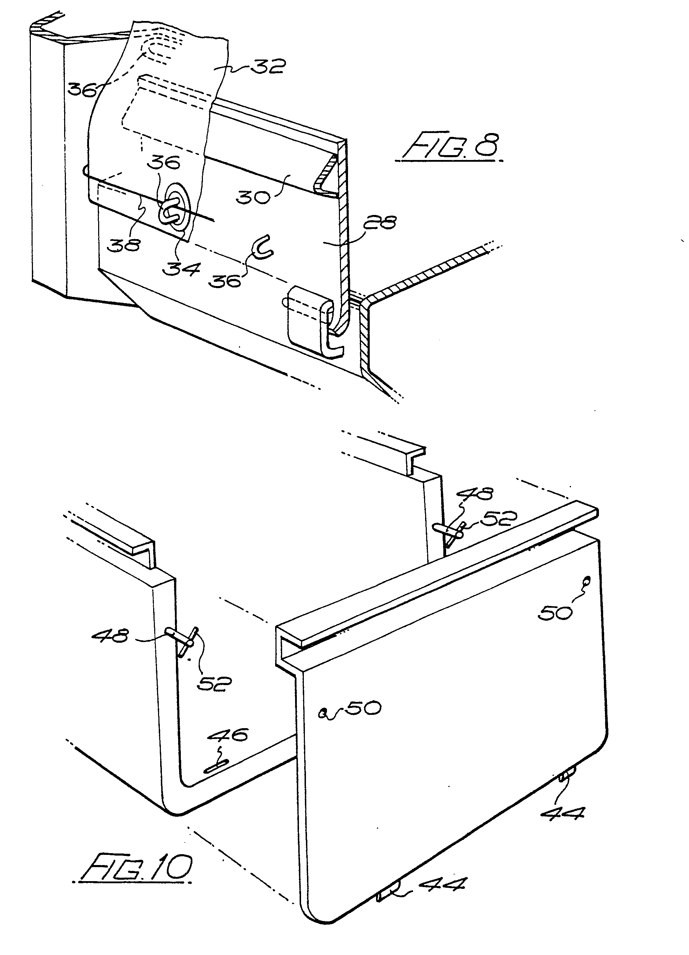

Referring now to Figures 4 and 5, it has been found that a useful modification is the fitment of guide channels 11 beneath the semi-trailer body as an aid in the positioning of the auxiliary load-carrying bodies or pods for connection thereto, each guide channel extending transversely of the semi-trailer body from a side edge thereof to the load-carrying element 18 depending from the underside of the main body midway of its width. In addition to the guide channels having been fitted beneath the semi-trailer body, each auxiliary load-carrying body or pod has been provided with a mushroom headed guide pin 13 upstanding from an inner portion, that is to say from a portion which when said body or pod is located in position beneath the main body lies alongside the load-carrying element 18 depending from the underside of the main body. This modified arrangement is such that, when it is desired to connect one of the auxiliary bodies or pods beneath the main body of the vehicle, the mushroom headed guide pin 13 of the auxiliary body or pod can be engaged in the outer end of the guide channel 11 and the auxiliary body or pod then moved into position beneath the main body. Being guided by the guide channel, the auxiliary body or pod is brought to the required position to automatically engage the tapered plugs 20 projecting from the plate element 18 with the tapered sockets 22 of the auxiliary body or pod. (It will of course be understood that the upstanding guide pin need not necessarily be mushroom headed. For example, it could carry a roller or rollers for engagement in the guide channel. Indeed guide elements other than guide channels could be fitted beneath the semi-trailer body. For example, lengths of I-section material could be used and in this case rollers carried by the inner portions of the auxiliary load-carrying bodies or pods could engage opposite sides of the web of the I-section).

Various other modifications may be made. For example, instead of a single pair of auxiliary bodies or pods there could be provided two or more pairs of appropriately shorter bodies or pods releasably secured side by side beneath the main box-like vehicle body. It will be noted that the "Twistlock" fastenings in the illustrated arrangement are located each some small distance from an end of the auxiliary body or pod concerned, this being thought to be preferable to reduce bending stress in the walls of each pod. However, if preferred, the fastenings could be located at the corners of the auxiliary bodies or pods, particularly in the case of a relatively short auxiliary body or pod.

The auxiliary bodies or pods may be made of any suitable material, but will generally be of fabricated construction and capable of being stacked in a laden or unladen condition. It will also be understood that depending upon the load which is to be carried, each auxiliary body or pod may be provided with a lid or cover to guard against the ingress of rainwater and road film and/or to guard against the contents being stolen when the loaded body or pod has been detached from the vehicle. Such a lid or cover will of course be of relatively lightweight construction and if weather protection is its main function may be made of a synthetic plastics material. For ease of handling, the lid or cover may be provided in two or more separate sections, or may be made of flexible material.

The auxiliary load-carrying bodies or pods need not necessarily be constructed as illustrated in the drawings. For example, depending upon the requirements of the vehicle operator, at least some of a number of auxiliary bodies or pods may be provided with at least one openable door in an end wall or side wall for the loading or unloading of goods. In Figures 6 to 9 there is illustrated a modified auxiliary load-carrying body or pod which has an end wall constituted in part by a drop down door 28, that is to say a door hinged along or adjacent its lower edge so as to be capable of forming a ramp extending from ground level to the interior of the body as shown in chain-dotted lines in Figure 7. On what is its external surface when closed, the drop down door is formed near its free edge with a formation 30 which constitutes a ground engaging element when the door is open.

The auxiliary load-carrying body or pod in this case is provided with a cover 32 made of a flexible sheet material, and provided with a series of metal eyelets 34 spaced apart along its marginal edges. When the cover is to be fitted in position, the metal eyelets are passed over respective metal rings 36 which are secured along upper edges of the fixed walls of the body or pod and across a lower part of the drop down door. The metal eyelets can subsequently be made captive on the rings 36 by a sheet fastening rope 38 which can be passed through the projecting portions of the metal rings (and of course the closed body or pod can then be sealed by Customs Officers in the way in which sheeted vehicles are conventionally sealed, that is to say be a seal applied to the ends of the sheet fastening rope). A removable shaft 40 (see Figure 6) extends across the body above the closed position of the door 28, the arrangement being such that the flexible cover can extend the full length of the body or pod before extending downwards into overlapping relation with the drop down door.

It will be seen in Figures 7 and 8 in particular that the side walls of the auxiliary body or pod extend some distance rearwardly of the closed position of the drop down door and of the removable shaft 40. Consequently, the door and the rearward part of the flexible cover are protected from damage as the body or pod is moved from place to place.

In Figure 10 there is illustrated a further modification, this including an end wall constituted by a door 42 which is completely removable. The door is connected to the auxiliary body or pod by locating means 44 in its underside which engage slots or the like 46 in the body or pod. Locating pins 48, which are to extend through holes 50 in the metal plate constituting the door, are provided with linch pins 52, these providing for quick and easy removal of the door but effectively preventing its inadvertent release from the body or pod. As shown, the upper portion of the door is provided with an inturned channel section configuration, this matching the similar formation of the upper portions of the side walls of the body or pod and being of the same general configuration as the opposite, fixed, end wall (not shown). This facilitates the fitment of a cover (not shown) made of a flexible sheet material.

A further possibility is that the auxiliary load-carrying bodies or pods or at least some of a number of pairs of such bodies or pods, may have provision for being mounted as the load-carrying body on a rigid frame of a smaller vehicle. For example, if the transverse bearers of the rigid frame of such a smaller vehicle are arranged at the conventional spacing of fork lift truck tines, the fork pockets 26 of the auxiliary load-carrying body or pod can be engaged with them. Alternatively, of course, the auxiliary bodies or pods could be provided with further transverse slots for this purpose, or with runners or whatever other fitments are required in any particular circumstances. Whichever of these arrangements is adopted, it will be useful for the auxiliary bodies or pods to be provided with drop down doors in what are to be their rear walls.

Thus it will be understood that the modified construction of auxiliary body or pod is in certain circumstances a considerable improvement on the construction originally described, in particular because it can with much greater facility be loaded with the goods which it is to carry, or be unloaded, for example by the use of a fork lift truck or by the use of sack carts or wheelbarrows.

**Claims**

1. A van type semi-trailer load-carrying road vehicle of the kind devoid of an underframe, having means whereby one or more auxiliary load-carrying bodies or pods (16, 16) can be releasably secured beneath the main box-like body (10) of the vehicle, characterized in that at least one pair of said bodies or pods (16, 16) are securable in back to back relation such that a respective one of the pair is at each side of the longitudinal centreline of the vehicle.

2. A van type semi-trailer load-carrying road vehicle according to claim 1, further characterised in that means whereby the or each pair of auxiliary load-carrying bodies or pods (16, 16) can be releasably secured beneath the main box-like body (10) are constituted by slideable engagement means (20, 22) for supporting at least part of the weight of the bodies or pods, and by locking means (24, 24) accessible beneath the side edges of the main box-like body (10) of the vehicle for securing said bodies or pods against sliding movement in said slideable engagement means when properly located beneath said main box-like body.

3. A van type semi-trailer load-carrying road vehicle according to claim 2, further characterised in that the slideable engagement means are constituted by plug and socket connectors (20, 22) at the inner portions of the bodies or pods (16, 16) whereby the latter are connectable to a longitudinally extending load-carrying plate element (18) depending from the underside of the main box-like body midway of its width.

4. A van type semi-trailer load-carrying road vehicle according to claim 3, further characterised in that the plugs (20) of the plug and socket connectors are tapered to facilitate the proper location of the auxiliary bodies or pods beneath the main body.

5. A van type semi-trailer load-carrying road vehicle according to either one of claims 3 and 4, further characterised in that guide elements (11) are provided beneath the main box-like body (10), said guide elements extending inwardly from the opposite side edges of the body, and inner portions of the load-carrying bodies or pods (16, 16) are provided with means (13) for slidably engaging said guide elements, whereby the slideable engagement means for connecting the load-carrying bodies or pods (16, 16) to the longitudinally extending load-carrying plate element (18) depending from the underside of the main box-like body (10) midway of its width are automatically brought into alignment as said bodies or pods are moved laterally beneath said main box-like body prior to being secured thereto.

6. A van type semi-trailer load-carrying road vehicle according to any one of the preceding claims, further characterised in that the locking means (24, 24) accessible beneath the side edges of the main box-like body (10) of the vehicle are constituted by so-called "Twistlock" fastenings for supporting part of the weight of the auxiliary bodies or pods in addition to their function of securing said bodies or pods against sliding movement in the slideable engagement means.

**Patentansprüche**

1. Sattelanhänger ohne Unterbau mit einer Einrichtung, mit der ein oder mehrere lasttragende Zusatz-Körper oder -Behälter (16, 16) unter dem Kastenaufbau (10) des Anhängers lösbar befestigt werden können, dadurch gekennzeichnet, daß mindestens ein Paar dieser Körper oder Behälter (16, 16) Rücken an Rücken derartig befestigbar sind, daß sich auf jeder Seite der Längsmittellinie des Anhängers ein Körper oder Behälter des Paares befindet.

2. Sattelanhänger nach Anspruch 1, dadurch gekennzeichnet, daß die Einrichtung zur lösbaren Befestigung eines jeden Paares von lasttragenden Hilfs-Körpern oder -Behältern (16, 16) unter dem Kastenaufbau (10) aus verschiebbaren Eingriffsmitteln (20, 22), die zumindest einen Teil des Gewichts der Körper oder Behälter aufnehmen, und aus Verriegelungsmitteln (24, 24) besteht, die unter den Seitenkanten des Kastenaufbaus (10) des Anhängers zugänglich sind, um die Körper oder Behälter gegen eine Verschiebebewegung in den verschiebbaren Eingriffsmitteln zu blockieren, wenn sie unter dem Kastenaufbau ordnungsgemäß angeordnet sind.

3. Sattelanhänger nach Anspruch 2, dadurch gekennzeichnet, daß die verschiebbaren Eingriffsmittel aus Bolzen-Buchsen-Verbindungen (20—22) bestehen, die an den inneren Bereichen der Körper oder Behälter (16, 16) angeordnet sind, wodurch diese mit einem sich in Längsrichtung erstreckenden lasttragenden Plattenelement (18) verbindbar sind, das in der Mitte des Kastenaufbaus von dessen Unterseite nach unten ragt.

4. Sattelanhänger nach Anspruch 3, dadurch gekennzeichnet, daß die Bolzen (20) der Bolzen- und Buchsen-Verbindungen verjüngt sind, um die ordnungsgemäße Lage der Hilfs-Körper oder -Behälter unter dem Kastenaufbau zu erleichtern.

5. Sattelanhänger nach Anspruch 3 oder 4, dadurch gekennzeichnet, daß unter dem Kastenaufbau (10) Führungselemente (11) angeordnet sind, die sich von den gegenüberliegenden Seitenkanten des Kastenaufbaus nach innen erstrecken, und daß die inneren Bereiche der lasttragenden Körper oder Behälter (16, 16) mit Mitteln (13) zum verschiebbaren Eingriff in die Führungselemente versehen sind, wodurch die verschiebbaren Eingriffsmittel zum Verbinden der lasttragenden Körper oder Behälter (16, 16) mit dem sich in Längsrichtung erstreckenden lasttragenden Plattenelement (18), das in der Mitte des Kastenaufbaus (10) von dessen Unterseite nach unten ragt, selbsttätig zur Deckung gebracht werden, wenn die Körper oder Behälter seitwärts unter dem Kastenaufbau bewegt werden, bevor sie an diesem befestigt werden.

6. Sattelanhänger nach einem der vorhergehenden Ansprüche, dadurch gekennzeichnet, daß die unterhalb der Seitenkanten des Kastenaufbaus (10) des Anhängers zugänglichen Verriegelungsmittel (24, 24) als Drehknebelverschlüsse ausgebildet sind, um zusätzlich zu ihrer Funktion, die Körper oder Behälter gegen eine Verschiebung in den verschiebbaren Eingriffsmitteln zu sichern, einen Teil der Hilfs-Körper oder -Behälter aufzunehmen.

**Revendications**

1. Véhicule routier transportant des charges, à semi-remorque du type fourgon, du type exempt de soubassement, ayant des moyens par lesquels un ou plusieurs corps auxiliaires ou mandrins transportant des charges (16, 16) peuvent être fixés de manière amovible en dessous de la carrosserie principale en forme de caisse (10) du véhicule, caractérisé en ce qu'au moins une paire desdits corps ou mandrins (16, 16) peut être fixée en relation dos à dos de manière que l'un respectif de la paire soit de chaque côté de l'axe longitudinal du véhicule.

2. Véhicule routier transportant des charges, à semi-remorque du type fourgon selon la revendication 1, caractérisé de plus en ce que les moyens par lesquels le ou chaque paire de corps auxiliaires ou mandrins transportant des charges (16, 16) peuvent être fixés de manière amovible en dessous de la carrosserie principale (10) en forme de caisse sont constitués de moyens coulissants d'engagement (20, 22) pour supporter au moins une partie du poids des corps ou mandrins et par des moyens de verrouillage (24, 24) accessibles en dessous des bords latéraux de la carrosserie principale (10) en forme de caisse, du véhicule, pour maintenir lesdits corps ou mandrins contre un mouvement coulissant dans lesdits moyens d'engagement coulissants lors d'une bonne mise en place en dessous de ladite carrosserie principale en forme de caisse.

3. Véhicule routier transportant des charges, à semi-remorque du type fourgon selon la revendication 2, caractérisé de plus en ce que les moyens coulissants d'engagement sont constitués de connecteurs mâles et femelles (20, 22) aux parties internes des corps ou mandrins (16, 16), ces derniers pouvant être connectés à un élément formant plaque (18) transportant des charges s'étendant longitudinalement pendant du dessous de la carrosserie principale en forme de caisse, à la moitié de sa largeur.

4. Véhicule routier transportant des charges, à semi-remorque du type fourgon selon la revendication 3, caractérisé de plus en ce que les connecteurs mâles (20) des connecteurs mâles et femelles sont effilés pour faciliter la bonne mise en place des corps auxiliaires ou mandrins en dessous de la carrosserie principale.

5. Véhicule routier transportant des charges, à semi-remorque du type fourgon, selon l'une quelconque des revendications 3 ou 4, caractérisé de plus en ce que des éléments de guidage (11) sont prévus en dessous de la carrosserie principale en forme de caisse (10), lesdits éléments de guidage s'étendant vers l'intérieur des bords latéraux opposés de la carrosserie, et des parties internes des corps ou mandrins transportant des charges (16, 16) sont pourvues de moyens (13) pour un engagement coulissant avec lesdits éléments de guidage, ainsi lesdits moyens coulissants d'engagement pour connecter lesdits corps ou mandrins transportant des charges (16, 16) à l'élément formant plaque transportant des charges (18) s'étendant longitudinalement, pendant du dessous de la carrosserie principale (10) en forme de caisse à la moitié de sa largeur, sont automatiquement mis en alignement tandis que lesdits corps ou mandrins sont déplacés latéralement en dessous de ladite carrosserie en forme de caisse avant d'y être fixés.

6. Véhicule routier transportant des charges, à semi-remorque du type fourgon, selon l'une quelconque des revendications précédentes, caractérisé de plus en ce que les moyens de verrouillage (24, 24) accessibles en dessous des bords latéraux de la carrosserie principale (10) en forme de caisse du véhicule sont constitués de fixations appelées "Twistlock" pour supporter une partie du poids des corps auxiliaires ou mandrins en plus de leur fonction de maintenir lesdits corps ou mandrins contre un mouvement coulissant dans les moyens coulissants d'engagement.

_FIG.1_

_FIG.2_

10    FIG. 3.

28

22

20

18

32

7

9

40

28

7

FIG. 6

FIG. 4

FIG. 5

FIG. 7

FIG. 9

*FIG.8*

*FIG.10*